# EUROPÄISCHE PATENTSCHRIFT

(11) **EP 1 381 134 B1**
(45) Veröffentlichungstag und Bekanntmachung des Hinweises auf die Patenterteilung: **16.11.2011**
(21) Anmeldenummer: 02405600.4
(22) Anmeldetag: 12.07.2002
(51) Int. Cl.: H02J 7/00

(54) **Akkubatterie-Ladestation**
Battery charging station
Station de charge de batterie

(43) Veröffentlichungstag der Anmeldung: 14.01.2004
(73) Patentinhaber: HILTI Aktiengesellschaft, 9494 Schaan (LI)
(72) Erfinder: Heigl, Bernd, 86199 Augsburg (DE); Ziegler, Bernd, 86856 Hiltenfingen (DE); Ontl, Rainer, 86899 Landsberg am Lech (DE)
(74) Vertreter: Wildi, Roland

(56) Entgegenhaltungen:
- EP-A- 0 920 105
- EP-A- 0 951 127
- EP-A- 1 100 173
- PATENT ABSTRACTS OF JAPAN vol. 1996, no. 11, 29. November 1996 (1996-11-29) & JP 08 185898 A (YAMAHA MOTOR CO LTD), 16. Juli 1996 (1996-07-16)

## Beschreibung

Die Erfindung bezeichnet eine Ladestation für eine mit dieser elektrisch und baulich verbindbaren wiederaufladbaren Batterie, wie ein Akkumodul für kabellose Handwerkzeugmaschinen.

Bei modernen wiederaufladbaren Batterien können mit Ladestationen in kurzer Zeit hohe Energiedichten geladen werden, wobei sich die Batterie stark erwärmt. Ein wichtiges Anwendungsfeld derartiger hochenergiedichter wiederaufladbarer Batterien sind die Akkumodule kabelloser Handwerkzeugmaschinen wie Bohrschrauber, Kombihämmer, Handkreissägen etc. Zudem erwärmt sich durch die Transformation der hohen Leistung ebenfalls die Ladeelektronik der Ladestation stark.

Nach der EP1178557A2 weist eine Ladestation für ein mit dieser elektrisch und baulich verbindbares wiederaufladbares Akkumodul für kabellose Handwerkzeugmaschinen eine Ladeelektronik in einem Ladegehäuse mit einer elektrischen und baulichen Kontaktschnittstelle für das Akkumodul auf, wobei im Ladegehäuse zwischen zwei Lüftungsöffnungen ein Luftgebläse, optimal eine strömungsseitig nachgeordnete Kühlung/Heizung angeordnet und eine strömungsausgangsseitige Lüftungsöffnung der baulichen Kontaktschnittstelle des Akkumoduls zugeordnet ist. Eine aktive Kühlung der ausserhalb des Luftstroms in Gehäuseecken bzw. getrennten Gehäuseteilen angeordneten Ladeelektronik erfolgt nicht, allerdings kann die Luft durch Abwärme des Ladegehäuses, welches den Luftstrom begrenzt, vorgewärmt sein, bevor sie das Akkumodul kühlt. Die vom Akkumodul erwärmte Luft wird ungenutzt an die Umgebung abgegeben.

Aus der JP 8185898 ist eine Kühlungseinrichtung für eine Batterie bekannt, die eine Ventilatoreinheit mit einem Kühlventilator und einem Ladegerät aufweist. Die Ventilatoreinheit ist an einem Kasten angebracht, der eine Batterie aufnimmt, die aus einer Mehrzahl von Sekundärbatterien gebildet ist. Die Temperatur der Sekundärbatterien wird über einen Thermistor gemessen, und eine Steuerung in dem Ladegerät veranlasst die Aufladung der Batterie, auf der Grundlage der Messung des Thermistors, wenn die Temperatur auf oder unterhalb eines vorgegebenen Wertes fällt.

Aus der EP 1 100 173 A2 ist eine Batterieladevorrichtung mit einer Kühleinrichtung für einen Batterieblock bekannt. Die Kühleinrichtung umfasst einen Luftgebläsemotor, einen Filter und einen Kanal zum Einleiten von Luft in einen im Batterieblock ausgebildeten Luftstromweg zur Kühlung des Batterieblocks.

Aus der EP 0 951 127 A2 ist ein Batterieaufladesystem bekannt, das ein Schraubgerät und eine Aufladeeinheit umfasst. Das Schraubgerät hat eine Werkzeugaufnahme und einen Anschluss für die Aufladeeinheit an einer Auswölbung des Handgriffes. Die Aufladeeinheit ist mit einem Gehäuse und einem Aufladestromkreis versehen, wobei das Gehäuse der Aufladeeinheit eine erste Mulde für die Werkzeugaufnahme des Schraubgeräts und eine zweite Mulde für die Auswölbung am Handgriff aufweist. In der Aufladeeinheit kann ein Ventilator angeordnet sein, der betrieben wird, wenn ein Netzschalter der Aufladeeinheit eingeschaltet ist. Der Ventilator fördert dabei im Betrieb Luft zu den beiden Mulden der Aufladeeinheit.

Die Aufgabe der Erfindung besteht in der Realisierung eines Verfahrens und einer Anordnung zur effizienten Kühlung von Batterie und Ladeelektronik.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist eine Ladestation für eine mit dieser elektrisch und baulich verbindbaren wiederaufladbaren Batterie eine Ladeelektronik auf, die in einem Ladegehäuse angeordnet und mit einer elektrischen und baulichen Kontaktschnittstelle für die Batterie ausgebildet ist, wobei das Ladegehäuse eine strömungseingangsseitige und eine strömungsausgangsseitige Lüftungsöffnung aufweist, im Ladegehäuse ein Luftgebläse zur Erzeugung eines Luftstromes angeordnet ist und der Luftstrom über die strömungseingangsseitige Lüftungsöffnung in das Ladegehäuse einströmt und über die strömungsausgangsseitige Lüftungsöffnung aus dem Ladegehäuse ausströmt, wobei die Kontaktschnittstelle für die Batterie der strömungseingangsseitigen Lüftungsöffnung räumlich zugeordnet ist und die Ladeelektronik wärmeabführend im Luftstrom zwischen der strömungseingangsseitigen und der strömungsausgangsseitigen Lüftungsöffnung angeordnet ist.

Die Anordnung sowohl der Batterie als auch der Ladeelektronik in Reihe in einem gemeinsamen wärmeabführenden Luftstrom nutzt diesen zweifach aus und kühlt somit effizient, da neben einer konstanten Kühlfläche und der Temperaturdifferenz auch insbesondere die Strömungsgeschwindigkeit in die Wärmeübergänge eingeht. Durch die Zuordnung der strömungseingangsseitigen Lüftungsöffnung zur Batterie gelangt die zuerst von der Batterie erwärmte Luft in das Ladegehäuse mit dem Luftgebläse, wo es danach noch die Ladeelektronik kühlt und anschließend an die Umgebung abgegeben wird.

Vorteilhaft weist ein Luftvolumen des Luftstromes zur Kühlung der Batterie eine Kühltemperatur KT und zur Kühlung des Ladegehäuses mit der Ladeelektronik eine Zwischentemperatur ZT auf, wobei ZT > KT gilt. Da die zulässige Oberflächentemperatur der Ladeelektronik wesentlich über der einer Batterie liegt, kann ein Luftvolumen mit der Kühltemperatur KT zuerst die Batterie und anschließend mit der Zwischentemperatur ZT die Ladeelektronik kühlen.

Vorteilhaft ist das Luftgebläse zwischen der strömungseingangsseitigen Lüftungsöffnung und der Ladeelektronik angeordnet, wodurch die im Überdruckströmungspfad angeordnete Ladeelektronik nicht zum Druckabfall im Unterdruckströmungspfad beiträgt, in welchem die Batterie angeordnet ist, wodurch eine starke Strömung erzielt wird.

Vorteilhaft bildet die strömungseingangsseitige Lüftungsöffnung mehrere, flächig verteilte Lufteinlassstellen aus, welche jeweils Kühlöffnungen der Batterie räumlich zugeordnet sind, wodurch das kühlende Luftvolumen auf einzelne Zellen innerhalb der Batterie verteilbar ist.

Vorteilhaft ist zwischen dem Luftgebläse und den Lufteinlassstellen eine strömungswiderstandsarme Druckkammer angeordnet, wodurch das kühlende Luftvolumen gleichmässig auf einzelne Zellen der Batterie verteilbar ist.

Vorteilhaft ist im Oberteil der Ladestation die strömungseingangsseitige Lüftungsöffnung angeordnet, wodurch bei zweckentsprechender Aufstellung der Ladestation weniger Staub vom Luftstrom erfasst wird, was insbesondere auf verschmutzten Baustellen vorteilhaft ist.

Im Wesentlichen bewegt das Kühlverfahren einer Ladestation für eine mit dieser elektrisch und baulich verbindbaren wiederaufladbaren Batterie einen Luftvolumen entlang eines Luftstromes in einem Ladegehäuse von einer strömungseingangsseitigen zu einer strömungsausgangsseitigen Lüftungsöffnung, wobei der Luftstrom von einem im Ladegehäuse der Ladestation angeordneten Luftgebläse erzeugt wird, wobei in einem ersten Verfahrensschritt das Luftvolumen mit einer Kühltemperatur KT an bzw. in der Batterie wärmeabführend vorbei bewegt wird und in einem zweiten Verfahrensschritt das Luftvolumen mit einer Zwischentemperatur ZT > KT das Ladegehäuse mit einer Ladeelektronik durchsetzt.

Zu ein und demselben strömenden Luftvolumen im Luftstrom bilden sich durch die zeitliche Reihenfolge der wärmeabführenden Zuordnung der Batterie und der Ladeelektronik unterschiedliche kühlende Wärmeübergänge aus, welche im wesentlichen von der Temperaturdifferenz abhängen. Da die zulässige Oberflächentemperatur der Ladeelektronik wesentlich über der einer Batterie liegt, kühlt ein der Umgebung entnommenes Luftvolumen mit Kühltemperatur KT zuerst die Batterie optimal, anschliessend mit der Zwischentemperatur ZT die Ladeelektronik hinreichend bevor es mit der Abwärmetemperatur AT wieder an die Umgebung abgegeben wird. Somit wird das insgesamt verfügbare, strömende Luftvolumen effizient zur Kühlung ausgenutzt.

Die Erfindung wird bezüglich eines vorteilhaften Ausführungsbeispiels näher erläutert mit einer Darstellung einer Ladestation mit Akkupack.

Nach der Darstellung ist eine Ladestation 1 mit einer Ladeelektronik 2 in einem Ladegehäuse 3 über eine elektrische und bauliche Kontaktschnittstelle 4 mit einer wiederaufladbaren Batterie 5 in Form eines Akkumoduls mit mehreren Zellen elektrisch und baulich verbunden. Im Ladegehäuse 2 ist ein Luftgebläse 6 angeordnet, welches durch zwei Lüftungsöffnungen 7a, 7b einen Luftstrom L erzeugt, in dem die Ladeelektronik 2 wärmeabführend angeordnet ist. Die strömungseingangsseitige Lüftungsöffnung 7a ist der baulichen Kontaktschnittstelle 4 der Batterie räumlich zugeordnet. Das Luftgebläse 6 ist zwischen der strömungseingangsseitigen Lüftungsöffnung 7a und der Ladeelektronik 2 angeordnet. Die strömungseingangsseitige Lüftungsöffnung 7a weist mehrere, flächig verteilte Lufteinlassstellen 8 auf, welche jeweils Kühlöffnungen 9 im Modulgehäuse der Batterie räumlich zugeordnet sind, wobei zwischen dem Luftgebläse 6 und den Lufteinlassstellen 8 eine strömungswiderstandsarme Druckkammer 10 angeordnet ist. Das Kühlverfahren bewegt ein fiktives Luftvolumen V entlang eines von dem Luftgebläse 6 erzeugten Luftstromes L, wobei das Luftvolumen V mit einer der Umgebung U entsprechenden Kühltemperatur KT an der Batterie 5 wärmeabführend vorbei bewegt wird und anschliessend mit einer Zwischentemperatur ZT > KT das Ladegehäuse 3 mit einer im Luftstrom L wärmeabführend angeordneten Ladeelektronik 2 durchsetzt, bevor es mit der Abwärmetemperatur AT wieder an die Umgebung U abgegeben wird.

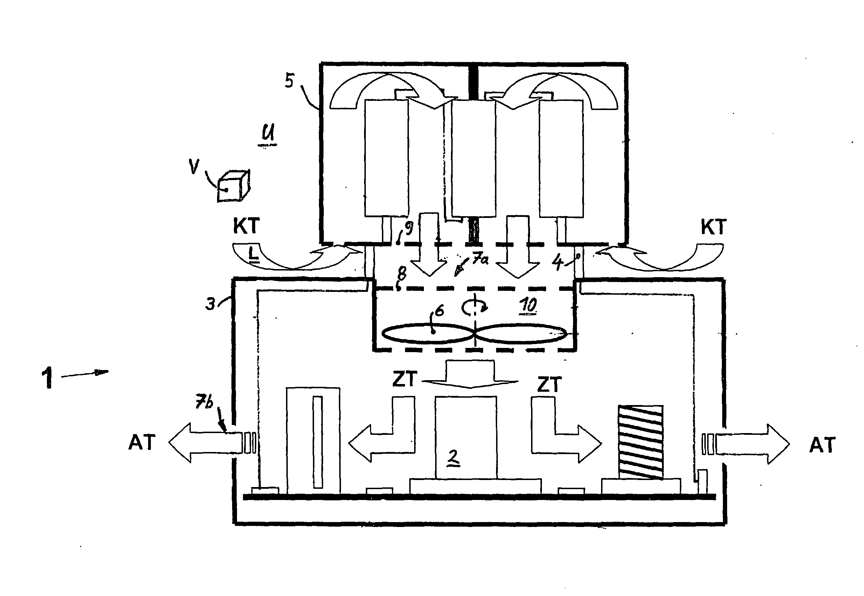

## Patentansprüche

1. Ladestation für eine mit dieser elektrisch und baulich verbindbaren wiederaufladbaren Batterie (5) mit einer Ladeelektronik (2), die in einem Ladegehäuse (3) angeordnet und mit einer elektrischen und baulichen Kontaktschnittstelle (4) für die Batterie (5) ausgebildet ist, wobei das Ladegehäuse (3) eine strömungseingangsseitige und eine strömungsausgangsseitige Lüftungsöffnung (7a, 7b) aufweist, im Ladegehäuse (3) ein Luftgebläse (6) zur Erzeugung eines Luftstromes (L) angeordnet ist und der Luftstrom (L) über die strömungseingangsseitige Lüftungsöffnung (7a) in das Ladegehäuse (3) einströmt und über die strömungsausgangsseitige Lüftungsöffnung (7a, 7b) aus dem Ladegehäuse (3) ausströmt, **dadurch gekennzeichnet, dass** die Kontaktschnittstelle (4) für die Batterie (5) der strömungs-eingangsseitigen Lüftungsöffnung (7a) räumlich zugeordnet ist und die Ladeelektronik (2) wärmeabführend im Luftstrom (L) zwischen der strömungseingangsseitigen und der strömungsausgangsseitigen Lüftungsöffnung (7a, 7b) angeordnet ist.

2. Ladestation nach Anspruch 1, **dadurch gekennzeichnet, dass** ein Luftvolumen (V) des Luftstromes (L) zur Kühlung der Batterie (5) eine Kühltemperatur (KT) und zur Kühlung des Ladegehäuses (3) mit der Ladeelektronik (2) eine Zwischentemperatur (ZT), mit ZT > KT, aufweist.

3. Ladestation nach Anspruch 1 oder 2, **dadurch gekennzeichnet, dass** das Luftgebläse (6) zwischen der strömungseingangsseitigen Lüftungsöffnung (7a) und der Ladeelektronik (2) angeordnet ist.

4. Ladestation nach einem der vorgehenden Ansprüche, **dadurch gekennzeichnet, dass** die strömungseingangsseitige Lüftungsöffnung (7a) mehrere, flächig verteilte Lufteinlassstellen (8) ausbildet, welche jeweils Kühlöffnungen (9) der Batterie (5) räumlich zugeordnet sind.

5. Ladestation nach Anspruch 3, **dadurch gekennzeichnet, dass** zwischen dem Luftgebläse (6) und den Lufteinlassstellen (8) eine strömungswiderstandsarme Druckkammer (10) angeordnet ist.

6. Ladestation nach einem der vorgehenden Ansprüche, **dadurch gekennzeichnet, dass** im Oberteil die strömungseingangsseitige Lüftungsöffnung (7a) angeordnet ist.

7. Kühlverfahren einer Ladestation (1) für eine mit dieser elektrisch und baulich verbindbaren wiederaufladbaren Batterie (5), wobei ein Luftvolumen (V) entlang eines Luftstromes (L) in einem Ladegehäuse (3) von einer strömungseingangsseitigen zu einer strömungsausgangsseitigen Lüftungsöffnung (7a, 7b) bewegt wird, wobei der Luftstrom (L) von einem im Ladegehäuse (3) der Ladestation (1) angeordneten Luftgebläse (6) erzeugt wird, wobei in einem ersten Verfahrensschritt das Luftvolumen (V) mit einer Kühltemperatur KT in/an der Batterie (5) wärmeabführend vorbei bewegt wird, **dadurch gekennzeichnet, dass** in einem zweiten Verfahrensschritt das Luftvolumen (V) mit einer Zwischentemperatur ZT > KT das Ladegehäuse (3) mit einer Ladeelektronik (2) durchsetzt.

## Claims

1. Loading station, for a rechargeable battery (5) which can be electrically and physically connected to it, having charger electronics (2) arranged in a charger housing (3), and constructed with an electrical and physical contact interface (4) for the battery (5), wherein the charger housing (3) has a vent opening (7a) at the flow inlet side and a vent opening (7b) at the flow outlet side, an air blower (6) for producing an airflow (L) is arranged in the charger housing (3) and the airflow (L) flows into the charger housing (3) via the vent opening (7a) at the flow inlet side and flows out of the charger housing (3) via the vent opening (7a, 7b) at the flow outlet side, **characterised in that** the contact interface (4) for the battery (5) is spatially associated with the vent opening (7a) at the flow inlet side, and the charger electronics (2) is arranged, such that heat is conducted away, in the airflow (L) between the vent opening (7a) at the flow inlet side and the vent opening (7a, 7b) at the flow outlet side.

2. Loading station according to claim 1, **characterised in that** a volume of air (V) of the airflow (L) has a cooling temperature (KT) for cooling the battery (5) and an intermediate temperature (ZT) for cooling the charger housing (3) that has the charger electronics (2), with ZT > KT.

3. Loading station according to claim 1 or 2, **characterised in that** the air blower (6) is arranged between the vent opening (7a) at the flow inlet side and the charger electronics (2).

4. Loading station according to one of the preceding claims, **characterised in that** the vent opening (7a) at the flow inlet side is constructed with a plurality of surface distributed air inlet locations (8) which are respectively spatially associated with cooling openings (9) of the battery (5).

5. Loading station according to claim 3, **characterised in that** a pressure chamber (10) that has low resistance to flow, is arranged between the air blower (6) and the air inlet locations (8).

6. Loading station according to one of the preceding claims, **characterised in that** the vent opening (7a) at the flow inlet side is arranged in the upper part.

7. Process for cooling of a loading station (1) for a rechargeable battery (5) which can be electrically and physically connected to it, wherein a volume of air (V) is moved along an airflow (L) in a charger housing (3) from a vent opening (7a) at a flow inlet side to a vent opening (7b) at a flow outlet side, wherein the airflow (L) is produced by an air blower (6) arranged in a charger housing (3) of the loading station (1), wherein in a first process step the volume of air (V) is moved past in/at the battery (5) at a cooling temperature (KT) so as to conduct heat away, **characterised in that** in a second process step the volume of air (V) traverses, at an intermediate temperature ZT > KT, the charger housing (3) which has charger electronics (2).

## Revendications

1. Station de charge pour une batterie rechargeable (5) pouvant être électriquement et physiquement reliée à celle-ci, comportant une électronique de charge (2) qui est agencée dans un boîtier de charge (3) et formée avec une interface de contact électrique et physique (4) pour la batterie (5), dans laquelle le boîtier de charge (3) comporte une ouverture de ventilation côté entrée d'écoulement et une ouverture de ventilation côté sortie d'écoulement (7a, 7b), un ventilateur d'air (6) est agencé dans le boîtier de charge (3) pour produire un courant d'air (L) et le courant d'air (L) entre par écoulement dans le boîtier de charge (3) par l'ouverture de ventilation côté entrée d'écoulement (7a) et sort par écoulement du boîtier de charge (3) par l'ouverture de ventilation côté sortie d'écoulement (7a, 7b), **caractérisée en ce que** l'interface de contact (4) pour la batterie (5) est spatialement associée à l'ouverture de ventilation côté entrée d'écoulement (7a) et l'électronique de charge (2) est agencée de manière à transférer de la chaleur dans le courant d'air (L) entre l'ouverture de ventilation côté entrée d'écoulement et l'ouverture de ventilation côté sortie d'écoulement (7a, 7b).

2. Station de charge selon la revendication 1, **caractérisée en ce qu'**un volume d'air (V) du courant d'air (L) a une température de refroidissement (KT) pour refroidir la batterie (5) et une température intermédiaire (ZT) pour refroidir le boîtier de charge (3) avec l'électronique de charge (2), avec ZT > KT.

3. Station de charge selon la revendication 1 ou 2, **caractérisée en ce que** le ventilateur d'air (6) est agencé entre l'ouverture de ventilation côté entrée d'écoulement (7a) et l'électronique de charge (2).

4. Station de charge selon l'une quelconque des revendications précédentes, **caractérisée en ce que** l'ouverture de ventilation côté entrée d'écoulement (7a) forme plusieurs points d'entrée d'air (8) répartis en surface, chaque point d'entrée étant spatialement associé à des ouvertures de refroidissement (9) de la batterie (5).

5. Station de charge selon la revendication 3, **caractérisée en ce qu'**une chambre de pression (10) présentant une faible résistance à l'écoulement est agencée entre le ventilateur d'air (6) et les points d'entrée d'air (8).

6. Station de charge selon l'une quelconque des revendications précédentes, **caractérisée en ce que** l'ouverture de ventilation côté entrée d'écoulement (7a) est agencée dans la partie supérieure.

7. Procédé de refroidissement d'une station de charge (1) pour une batterie rechargeable (5) pouvant être électriquement et physiquement reliée à celle-ci, dans lequel un volume d'air (V) est déplacé le long d'un courant d'air (L) dans un boîtier de charge (3) à partir d'une ouverture de ventilation côté entrée d'écoulement jusqu'à une ouverture de ventilation côté sortie d'écoulement (7a, 7b), dans lequel le courant d'air (L) est produit à partir d'un ventilateur d'air (6) agencé dans le boîtier de charge (3) de la station de charge (1), dans lequel lors d'une première étape de procédé, le volume d'air (V) à une température de refroidissement KT est déplacé de manière à transférer de la chaleur dans/sur la batterie (5), **caractérisé en ce que** lors d'une seconde étape de procédé, le volume d'air (V) à une température intermédiaire ZT > KT traverse le boîtier de charge (3) contenant une électronique de charge (2).
